(19) **Europäisches Patentamt / European Patent Office / Office européen des brevets**

(11) **EP 4 684 878 A1**

(12) # EUROPEAN PATENT APPLICATION
published in accordance with Art. 153(4) EPC

(43) Date of publication:
**28.01.2026 Bulletin 2026/05**

(21) Application number: **24774979.9**

(22) Date of filing: **21.03.2024**

(51) International Patent Classification (IPC):
**B01J 47/12** (2017.01)　　**B01J 39/05** (2017.01)
**B01J 41/05** (2017.01)　　**B01J 41/14** (2006.01)
**B01J 43/00** (2006.01)　　**C08J 5/22** (2006.01)

(52) Cooperative Patent Classification (CPC):
**B01J 39/05; B01J 41/05; B01J 41/14; B01J 43/00; B01J 47/12; C08J 5/22**

(86) International application number:
**PCT/JP2024/011168**

(87) International publication number:
**WO 2024/195845 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 23.03.2023　JP 2023047319
23.03.2023　JP 2023047320

(71) Applicant: **TOKUYAMA CORPORATION Yamaguchi 745-8648 (JP)**

(72) Inventors:
- **SUGATA, Masami**
  **Shunan-shi, Yamaguchi 745-8648 (JP)**
- **ABE, Shohei**
  **Shunan-shi, Yamaguchi 745-8648 (JP)**
- **FUKUTOMI, Ryohei**
  **Shunan-shi, Yamaguchi 745-8648 (JP)**
- **MISHIMA, Yu**
  **Shunan-shi, Yamaguchi 745-8648 (JP)**
- **ISOMURA, Takenori**
  **Shunan-shi, Yamaguchi 745-8648 (JP)**

(74) Representative: **Hoffmann Eitle Patent- und Rechtsanwälte PartmbB Arabellastraße 30 81925 München (DE)**

(54) **ION EXCHANGE MEMBRANE WOUND BODY, METHOD FOR MANUFACTURING ION EXCHANGE SHEET, AND METHOD FOR MANUFACTURING ION EXCHANGE MEMBRANE WOUND BODY**

(57) Provided are an ion exchange membrane roll with high production efficiency, and an ion exchange sheet producing method. According to the embodiments, the ion exchange membrane roll is provided. The ion exchange membrane roll is a roll of a planar ion exchange membrane in a dry condition. The ion exchange membrane has a first side and a second side. The second side is orthogonal to the first side, and has a length equal to or shorter than that of the first side. In the ion exchange membrane roll, the ion exchange membrane is wound around a winding shaft in the direction parallel to the second side. The air layer proportion of the ion exchange membrane roll is more than 5% and at most 50%.

Fig. 3

EP 4 684 878 A1

**Description**

[Technical Field]

The present invention relates to ion exchange membrane rolls, ion exchange sheet producing methods, and ion exchange membrane roll producing methods.

[Background Art]

Ion exchange membranes are membranes having an ion exchange function. For example, an ion exchange membrane is obtained by shaping an ion exchange resin into a membrane or by filling the pores of a porous matrix with an ion exchange resin. Ion exchange membranes include cation exchange membranes permeable to cations alone, and anion exchange membranes permeable to anions alone. Ion exchange membranes are utilized for pure water producing systems, sea water desalination systems, demineralizers, fuel cells, water electrolyzers, etc.

[Citation List]

[Patent Literature]

Patent Literature 1: JP 2013-177505 A
Patent Literature 2: JP 2023-022684 A

[Summary of Invention]

[Technical Problem]

An object of the present invention is to provide an ion exchange membrane roll with high production efficiency, an ion exchange sheet producing method, and an ion exchange membrane roll producing method.

[Solution to Problem]

As a result of their diligent studies to solve the aforementioned problem, the inventors of the present invention found out that the problem can be solved by setting the air layers proportion in a planar ion exchange membrane roll in a dry condition to be within a predetermined range, and the inventors completed the undermentioned invention (first embodiment).

As a result of their diligent studies to solve the aforementioned problem, the inventors of the present invention also found out that the problem can be solved by an ion exchange membrane roll producing method of conveying an ion exchange membrane in a dry condition to a core at a predetermined conveyance speed, and winding the ion exchange membrane in a dry condition around the core at a predetermined winding tension in such a manner that, in this winding, no pressure is applied to the core or the surface of the ion exchange membrane in a dry condition, which is part of the ion exchange membrane that has been wound around the core, and the inventors completed the undermentioned invention (second embodiment).

[1] An ion exchange membrane roll formed by winding a planar ion-exchange membrane in a dry condition by use of a winding shaft in a direction parallel to a second side of the ion exchange membrane, the ion exchange membrane having a first side and the second side that is orthogonal to the first side and that has a length equal to or shorter than the first side, wherein

an air layer proportion represented by the following formula (I) is more than 5% and at most 50%:

$$(I): \text{the air layer proportion } (\%) = (Aa - dL)/Aa \times 100$$

in the formula (I), Aa is a mean area of a cross section of the ion exchange membrane in the roll, the cross section being orthogonal to a direction of the winding shaft,
d is a mean thickness of the ion exchange membrane, and

L is a length of the first side of the ion exchange membrane.

[2] The ion exchange membrane roll according to [1], wherein
the air layer proportion is 7% to 38%.

[3] The ion exchange membrane roll according to [1] or [2], wherein
a hardness measured by a durometer (Asker durometer type C) is 80 to 95.

[4] The ion exchange membrane roll according to any one of [1] to [3], wherein the ion exchange membrane has a mean thickness d of 10 $\mu$m to 200 $\mu$m.

[5] The ion exchange membrane roll according to any one of [1] to [4], wherein
a ratio Br/d of a radius Br of the cross section of the ion exchange membrane roll to the mean thickness d of the ion exchange membrane is 450 to 12000.

[6] The ion exchange membrane roll according to any one of [1] to [5], wherein
the ion exchange membrane contains a porous matrix, and an ion exchange resin supported in the porous matrix.

[7] The ion exchange membrane roll according to [6], wherein
the ion exchange resin contains at least one ion exchange group selected from the group consisting of quaternary ammonium, pyridinium, triazolium, and imidazolium.

[8] The ion exchange membrane roll according to [6] or [7], wherein
the porous matrix contains a polyolefin resin.

[9] The ion exchange membrane roll according to any one of [1] to [8], wherein
the ion exchange membrane roll has a cylindrical shape.

[10] The ion exchange membrane roll according to any one of [1] to [9], further comprising:

a core, wherein
the ion exchange membrane has been wound around the core.

[11] The ion exchange membrane roll according to any one of [1] to [10], wherein
a ratio Br/Cr of the radius Br of the cross section of the ion exchange membrane roll to a radius Cr of the core is 1.1 to 3.3.

[12] A method of producing an ion exchange membrane roll, the roll including: a core; and an ion exchange membrane in a dry condition, the ion exchange membrane having been wound around the core, the method comprising:

conveying the ion exchange membrane in the dry condition to the core at a conveyance speed of 0.75 m/min to 30 m/min; and
winding the ion exchange membrane in the dry condition around the core at a winding tension of 3 N/m to 100 N/m, wherein
the ion exchange membrane in the dry condition is wound around the core in such a manner that no pressure is applied to the core or a surface of the ion exchange membrane in the dry condition, the surface being part of the ion exchange membrane, the part having been wound around the core.

[13] The method according to [12], wherein
the winding tension is 5 N/m to 50 N/m.

[14] The method according to [12] or [13], wherein
the conveyance speed is 3 m/min to 30 m/min.

[15] The method according to any one of [12] to [14], wherein
a ratio Br/Cr of a radius Br of a cross section of the ion exchange membrane roll to a radius Cr of the core is 1.1 to 3.3, the cross section being orthogonal to a winding shaft direction of the ion exchange membrane roll.

[16] The method according to any one of [12] to [15], wherein
the ion exchange membrane contains a porous matrix, and an ion exchange resin supported in the porous matrix.

[17] The method according to [16], wherein
the ion exchange resin contains at least one ion exchange group selected from the group consisting of quaternary ammonium, pyridinium, triazolium, and imidazolium.

[18] The method according to [16] or [17], wherein
the porous matrix contains a polyolefin resin.

[19] The method according to any one of [12] to [18], further comprising:
drying the ion exchange membrane in a wet condition to obtain the ion exchange membrane in the dry condition.

[20] The method according to [19], further comprising:

supporting a curable composition containing an ion exchange resin precursor on a porous matrix to obtain a structure;

curing the curable composition in the structure to obtain an ion exchange membrane precursor; and

introducing an ion exchange group into the ion exchange membrane precursor to obtain the ion exchange membrane in the wet condition.

[21] A method of producing an ion exchange sheet, the method comprising:

unwinding the ion exchange membrane roll according to any one of [1] to [11], or the ion exchange membrane roll obtained by the method according to any one of [12] to [20] to draw out the ion exchange membrane; and

cutting the ion exchange membrane after the unwinding.

[Advantageous Effects of Invention]

According to the present invention, an ion exchange membrane roll with high production efficiency, an ion exchange sheet producing method, and an ion exchange membrane roll producing method are provided.

[Brief Description of Drawings]

[Fig. 1] Fig. 1 is a perspective view schematically showing one example of ion exchange membranes.

[Fig. 2] Fig. 2 is a perspective view schematically showing one example of the ion exchange membrane roll according to an embodiment.

[Fig. 3] Fig. 3 is a cross-sectional view schematically showing one example of a cross section of the ion exchange membrane roll.

[Fig. 4] Fig. 4 is a schematic view schematically showing one example of a polymerizable composition impregnation apparatus.

[Fig. 5] Fig. 5 is a schematic view schematically showing one example of an ion exchange membrane roll producing apparatus.

[Description of Embodiments]

Some ion exchange membranes are produced as continuous films having a long side equal to or more than a dozen multiple of a short side thereof in length. An apparatus such as a water electrolyzer uses thereinside an ion exchange membrane of a desired size that is obtained by cutting, or stamping out from such a continuous film-shaped ion exchange membrane. Such an apparatus may use the ion exchange membrane thereinside in a wet condition where the membrane is in contact with a water-containing solvent, or in a wet and dry repeating condition.

Ion exchange membranes exert there ion exchange function in wet conditions. To maintain this quality, some ion exchange membranes have been kept in wet conditions but never in dry conditions since produced in the form of continuous film until cut to have desired sizes or until put in apparatus. However, in the step of cutting a continuous film-shaped ion exchange membrane to have a desired size, some use the ion exchange membrane in a dry condition more desirably than in a wet condition. Further, some continuous film-shaped ion exchange membranes are transported in the form of roll formed by winding the continuous film-shaped ion exchange membranes in wet conditions into rolls. Ion exchange membranes in dry conditions can reduce the transportation cost because lighter than ion exchange membranes in wet conditions in weight.

An ion exchange membrane roll according to the first embodiment is a roll of a planar ion exchange membrane in a dry condition. The ion exchange membrane has a first side and a second side. The second side is orthogonal to the first side, and has a length equal to or shorter than that of the first side. In the ion exchange membrane roll, this ion exchange membrane has been wound using a winding shaft in a direction parallel to the second side. The air layer proportion of the ion exchange membrane roll is more than 5% and at most 50%. This air layer proportion may mean the proportion of the air between the layers in the wound ion exchange membrane in the ion exchange membrane roll. That is, the air layer proportion is the value $(Aa - dL)/Aa$ obtained by: dividing, by the cross-sectional area $Aa$ of the ion exchange membrane of the ion exchange membrane roll, the value $Aa - dL$ obtained by subtracting the area $dL$ of a side face on either long side of the ion exchange membrane from the cross-sectional area $Aa$ of the ion exchange membrane in the ion exchange membrane roll. The cross-sectional area $Aa$ of the ion exchange membrane in the ion exchange membrane roll larger than the area $dL$ of the side face of the ion exchange membrane, that is, the air layer proportion higher than 0% means that the atmosphere is taken in the spaces between the layers of the ion exchange membrane in the ion exchange membrane roll. In other words, the cross-sectional area $Aa$ of the ion exchange membrane in the ion exchange membrane roll equal to the area dL of the side face of the ion exchange membrane, that is, the air layer proportion being 0% means that the ion exchange membrane has been wound without any space in the ion exchange membrane roll.

An ion exchange membrane roll producing method according to the second embodiment includes: conveying the ion exchange membrane in a dry condition to a core at a conveyance speed of 0.75 m/min to 30 m/min, and winding the ion exchange membrane in a dry condition around the core at a winding tension of 3 N/m to 100 N/m. In this winding, the ion exchange membrane in a dry condition is wound around the core in such a manner that no pressure is applied to the core or the surface of the ion exchange membrane in a dry condition, which is part of the ion exchange membrane that has been wound around the core.

An ion exchange membrane having a desired size can be efficiently produced by using such an ion exchange membrane roll, or an ion exchange membrane roll in a dry condition that is obtained by such a method. That is, in order to continuously produce an ion exchange membrane sheet having a desired size from an ion exchange membrane roll in a dry condition, it is necessary to pull, at a constant speed, part of an ion exchange membrane that is the outermost layer of the ion exchange membrane roll, that is, to unwind the ion exchange membrane roll to draw out the ion exchange membrane at a constant speed while rotating the ion exchange membrane roll. It may be required to maintain a constant conveyance speed and a constant tension during this unwinding to draw out the ion exchange membrane so as not to sag and/or slip the unwound ion exchange membrane.

However, a hard unwinding phenomenon due to adhesion of the overlaid layers of the ion exchange membrane to each other, that is, blocking may occur in the ion exchange membrane roll in a dry condition. Bocking is considered to occur because certain bonds are formed between ion exchange groups present on the surface of the ion exchange membrane in a dry condition, or between the ion exchange groups and resin. Blocking having occurred during the unwinding to draw out the ion exchange membrane causes the load necessary for the unwinding to draw out the ion exchange membrane not to be in a constant amount to fluctuate the unwinding speed and the tension, whereby the unwound ion exchange membrane may partially sag or flap. Unwinding by applying a load in an amount more than necessary to eliminate the sags may deform or may pucker, in the conveying step, the unwound ion exchange membrane. Further, too strong adhesion of the layers of the ion exchange membrane to each other in the ion exchange membrane roll may cause the ion exchange membrane to break because it is impossible to peel off part of the ion exchange membrane alone that is the outermost layer, or may deform excessively bonded portion.

The air layer proportion in the ion exchange membrane roll according to the first embodiment is more than 5% and at most 50%. The wound ion exchange membrane in such an ion exchange membrane roll is considered to be provided with a certain amount of air layers. Setting the air layer proportion to be more than 5% suppresses adhesion of the layers of the ion exchange membrane to each other, which can make it difficult for blocking to occur. In contrast, too high an air layer proportion deteriorates the adhesiveness of the layers of the ion exchange membrane to each other, and thus, the ion exchange membrane roll sags, and the shape thereof tends not to be maintained. Further, the ion exchange membrane roll having an air layer proportion of 50% or more tends to be into the state where the ion exchange membrane partially projects from the side faces of the ion exchange membrane roll that are orthogonal to the winding shaft direction to be wound with the short sides thereof dislocated, which is so-called weaving. This is because air excessively taken in the spaces between the layers in the ion exchange membrane causes the layers of the ion exchange membrane to easily slip on each other in the step of producing the ion exchange membrane roll, which may cause the ion exchange membrane to meander. Further, too high an air layer proportion leads to a tendency for inner layers of the ion exchange membrane to partially project to one side face when the other side face takes an impact when the ion exchange membrane roll is being stored or transported. Setting the air layer proportion to 50% or less allows the shape of the ion exchange membrane roll to be maintained, and allows the roll to hardly weave. Therefore, using the ion exchange membrane roll according to the embodiment allows the ion exchange membrane roll to be continuously unwound to draw out the ion exchange membrane with the speed and the tension kept constant. Thus, the ion exchange membrane of a desired shape can be continuously produced with a high yield.

An appropriate volume of the atmosphere is considered to be present between the layers of the ion exchange membrane that are overlaid with each other in the ion exchange membrane roll obtained by the method according to the second embodiment. The presence of this atmosphere suppresses adhesion of the layers of the ion exchange membrane to each other, which can make it difficult for blocking to occur. This producing method is also capable of preventing the atmosphere from being taken into the spaces between the layers of the ion exchange membrane. Production under the condition where an excessive volume of the atmosphere is taken into the spaces between the layers of the ion exchange membrane leads to lowered adhesiveness of the layers of the ion exchange membrane to each other, which leads to a tendency to be easily in the state where the ion exchange membrane partially projects from the end faces orthogonal to the winding shaft direction to be wound with the short sides thereof dislocated, which is so-called weaving. Further, the produced ion exchange membrane roll sags, which makes it difficult to maintain the shape thereof. Therefore, according to this producing method, an ion exchange membrane roll where blocking hardly occurs, and that less weaves is obtained. Using this ion exchange membrane roll allows the ion exchange membrane roll to be continuously unwound to draw out the ion exchange membrane with the speed and the tension kept constant. Thus, ion exchange membranes of desired shapes can be continuously produced with a high yield.

Hereinafter the ion exchange membrane roll according to the first embodiment and the ion exchange membrane roll producing method according to the second embodiment will be described in detail.

<Ion Exchange Membrane Roll>

The ion exchange membrane roll is a roll of an ion exchange membrane in a dry condition. A dry condition here means that the water content of the atmosphere and the water content of the ion exchange membrane are in equilibrium. The equilibrium means, for example, that the rate of change of weight is within 1%. The rate of change of weight can be calculated, for example, by the following method. First, an ion exchange membrane 50 millimeters square or more in size is cut out to obtain a sample. This sample is weighed and allowed to stand in the atmosphere for 1 hour. The sample after 1 hour is weighed to calculate the rate of the change between the weight before the test and the weight after the test.

The ion exchange membrane is a planar membrane having a first side, and a second side orthogonal to the first side. When the state where the ion exchange membrane makes one round is considered to be one winding, the number of times of the windings of the ion exchange membrane is, for example, at least 50, and may be at least 300. This number of times of the windings has no upper limit in particular, and in one example, is at most 3000.

The length L of the first side is equal to or longer than the length W of the second side. The length L of the first side is, for example, 1 m to 2000 m. The length L may be 10 m to 100 m, and may be 50 m to 800 m. The length W of the second side is, for example, 50 mm to 1500 mm. The length W may be 100 mm to 1200 mm, and may be 400 mm to 1000 mm. The longer the length L is, the more excellent the productivity of ion exchange membrane sheets is; and the longer the length W is, the more excellent the productivity of ion exchange membrane sheets is. Both the length L and the length W have no upper limit in particular, whereas being within the above ranges tend not to lead to deflection due to self-weight. The ratio L/W of the length L of the first side to the length W of the second side is, for example, 30 to 2500. The ratio L/W may be 100 to 1800, and may be 200 to 1500. The mean membrane thickness d of the ion exchange membrane is, for example, 10 $\mu$m to 200 $\mu$m. The mean membrane thickness d is, for example, 15 $\mu$m to 150 $\mu$m. The thickness d may be 20 $\mu$m to 150 $\mu$m, and may be 25 $\mu$m to 100 $\mu$m.

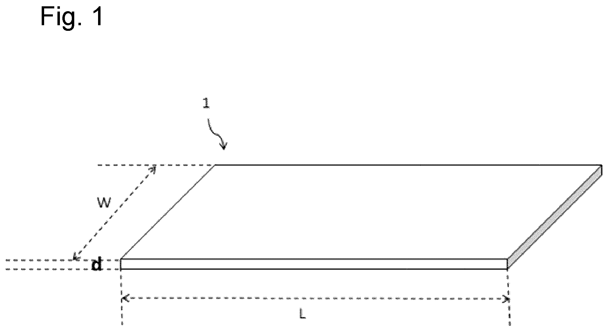

Fig. 1 is a perspective view schematically showing one example of ion exchange membranes. An ion exchange membrane 1 shown in Fig. 1 is a film-shaped membrane having the length L of a first side, the length W of a second side, and the thickness d. The length L is longer than the length W.

The ion exchange membrane roll typically has a cylindrical shape. The cross section of the ion exchange membrane roll that is orthogonal to the winding shaft direction typically has a circular shape. This cross-sectional shape may be oval.

The length Bw of the ion exchange membrane roll in the winding shaft direction is the same as that of either short side of the ion exchange membrane, that is, the length W of the second side.

When the ion exchange membrane roll is in the form of cylinder, the circumference Bc of the cross section of the ion exchange membrane roll that is orthogonal to the winding shaft direction is, for example, 65 mm to 1800 mm. The circumference Bc may be 150 mm to 1500 mm, and may be 300 mm to 1000 mm. The circumference Bc of the ion exchange membrane roll can be measured by using a tape measure or the like.

The diameter Bl of the circle on this cross section represents the length, that is, the width and also the height of the ion exchange membrane roll in the direction orthogonal to the winding shaft direction. The diameter Bl of the circle is, for example, 20 to 580 mm. The diameter Bl of the circle may be 45 mm to 480 mm, and may be 95 mm to 320 mm. The diameter Bl of the circle can be calculated from the circumference Bc of the ion exchange membrane roll.

The ratio Br/d of the radius Br (mm) of the cross section of the ion exchange membrane roll to the mean thickness d (mm) of the ion exchange membrane is, for example, 450 to 12000. This ratio Br/d may be 1000 to 8000, and may be 1500 to 6000.

The ion exchange membrane roll may further include a core. In the ion exchange membrane roll, the ion exchange membrane has been wound around the core in the long side direction from the end of one short side of the ion exchange membrane to the end of the other short side thereof.

Examples of the material of the core include paper, a paper impregnated with resin, resin, and metal. Preferably, the core is made from a resin because of less deformation. Examples of a resin as used herein include polyethylene, polystyrene, polypropylene, and ABS. Other than the foregoing, an impregnation-type core may be used as a resin core. This impregnation-type core is formed by winding a carbon fiber or a glass fiber to have a cylindrical shape, and impregnating, with a thermoplastic resin such as a phenolic resin or an epoxy resin, to cure the resultant.

The core typically has a cylindrical shape. Preferably, the length Cw of the core in the winding shaft direction when the core is attached to the winding shaft is equal to or longer than the length W of the second side of the ion exchange membrane. The length Cw of the core in the winding shaft direction is, for example, 10 mm to 1600 mm. The length Cw of the core may be 100 mm to 1300 mm, and may be 400 mm to 1100 mm. The difference Cw - Bw between the length Bw of the ion exchange membrane roll in the winding shaft direction and the length Cw of the core in the winding shaft direction is, for example, 0 mm to 400 mm. The difference Cw - Bw is preferably 20 mm to 300 mm.

The circumference Cc on the cross section of the core that is orthogonal to the winding shaft direction is shorter than the circumference Bc of the ion exchange membrane roll. The circumference Cc is, for example, 30 mm to 630 mm. The circumference Cc may be 150 mm to 600 mm, and may be 200 mm to 560 mm. The ratio Bc/Cc of the circumference Bc of the ion exchange membrane roll to the circumference Cc of the core is, for example, 1.1 to 3.3. The ratio Bc/Cc is preferably 1.2 to 2.5. The circumference Cc of the core can be measured by using a tape measure or the like. The circumference Cc of the core may be calculated from the diametric Cl of the core.

The diameter Cl of the circle on the cross section of the core represents the length, that is, the width and also the height in the direction orthogonal to the winding shaft direction. The diameter Cl of the circle is, for example, 10 to 200 mm. The diameter Cl of the circle may be 50 mm to 190 mm, and may be 70 mm to 180 mm. The diameter Cl of the circle can be measured by using a tape measure or the like.

In the ion exchange membrane roll, the ratio Br/Cr of the radius Br on the cross section of the ion exchange membrane roll to the radius Cr of the core is, for example, 1.1 to 3.3. The ratio Br/Cr may be 1.2 to 3.0, and may be 1.5 to 2.8.

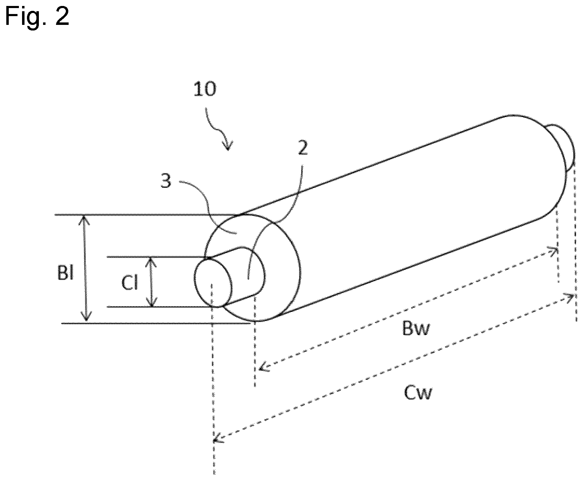

Fig. 2 is a perspective view schematically showing one example of the ion exchange membrane roll according to the embodiment. An ion exchange membrane roll 10 shown in Fig. 2 includes a core 2 and an ion exchange membrane part 3. The ion exchange membrane part 3 includes the ion exchange membrane 1 shown in Fig. 1. The ion exchange membrane 1 has been wound around the core 2. The ion exchange membrane roll 10 shown in Fig. 2 has a cylindrical shape extending in the winding shaft direction. The ion exchange membrane roll 10 has the length Bw in the winding shaft direction, and the diameter Bl in the direction orthogonal to the winding shaft direction. The core 2 shown in Fig. 2 has a cylindrical shape. The core 2 has the length Cw in the winding shaft direction, and the diameter Cl in the direction orthogonal to the winding shaft direction.

The air layer proportion of the ion exchange membrane roll is more than 5% and at most 50%. The air layer proportion can be calculated by the following formula (I):

$$\text{(I): the air layer proportion (\%)} = (Aa - dL)/Aa \times 100.$$

In the formula (I), Aa is the mean area of the cross section of the ion exchange membrane that is orthogonal to the winding shaft direction in the ion exchange membrane roll, d is the mean thickness of the ion exchange membrane, and L is the length of the first side of the ion exchange membrane.

The air layer proportion may mean the proportion of the air between the layers in the wound ion exchange membrane in the ion exchange membrane roll. That is, the air layer proportion is the value (Aa - dL)/Aa obtained by: dividing, by the cross-sectional area Aa of the ion exchange membrane of the ion exchange membrane roll, the value Aa - dL obtained by subtracting the area dL of a side face on either long side of the ion exchange membrane from the cross-sectional area Aa of the ion exchange membrane in the ion exchange membrane roll. The cross-sectional area Aa of the ion exchange membrane in the ion exchange membrane roll larger than the area dL of the side face of the ion exchange membrane, that is, the air layer proportion higher than 0% means that the atmosphere is taken in the spaces between the layers of the ion exchange membrane in the ion exchange membrane roll. In other words, the cross-sectional area Aa of the ion exchange membrane in the ion exchange membrane roll equal to the area dL of the side face of the ion exchange membrane, that is, the air layer proportion being 0% means that the ion exchange membrane has been wound without any space in the ion exchange membrane roll.

In the ion exchange membrane roll having an air layer proportion more than 5%, adhesion of the layers of the ion exchange membrane to each other tends to be suppressed, which makes it difficult for blocking to occur. The ion exchange membrane roll having an air layer proportion of 50% or less tends to maintain the shape thereof, and to hardly weave.

The air layer proportion calculating method will be described with reference to the drawing.

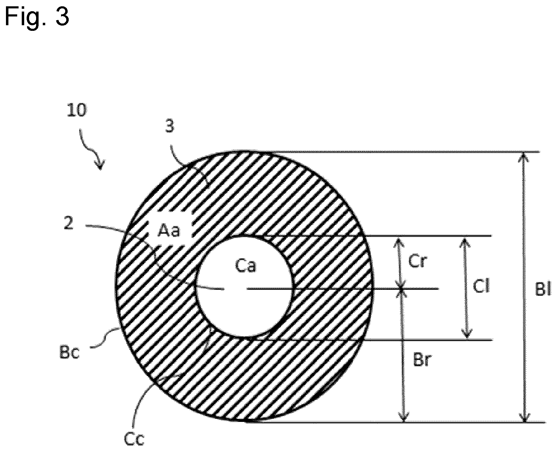

Fig. 3 is a cross-sectional view schematically showing one example of the cross section of the ion exchange membrane roll. Fig. 3 shows the cross-sectional view obtained by cutting the ion exchange membrane roll 10 shown in Fig. 2 in the direction orthogonal to the winding shaft direction. The ion exchange membrane part 3 is provided with air layers between the layers of the ion exchange membrane 1.

First, ten circumferences of the ion exchange membrane roll 10 at regular intervals in the winding shaft direction are measured using a tape measure or the like. From the mean value of the measurements results, the circumference Bc of the ion exchange membrane roll 10 is obtained. Next, the diameters of the core 2 at both the ends are measured using a tape measure or the like. From the mean vale of the measurements results, the diameter Cl of the core is obtained. From the circumference Bc of the of the ion exchange membrane roll 10, and the ratio of a circle's circumference to its diameter, 3.14, the diameter Bl of the ion exchange membrane roll 10, and further, the radius Br of the ion exchange membrane roll 10 are calculated. From the obtained radius Br, and the ratio of a circle's circumference to its diameter, 3.14, the cross-sectional area Ba of the ion exchange membrane roll 10 is calculated. From the diameter Cl of the core 2, the radius Cr is calculated. From the radius Cr, and the ratio of a circle's circumference to its diameter, 3.14, the cross-sectional area Ca of the core 2 is calculated. The cross-sectional area Ba - Ca of the ion exchange membrane part 3 is obtained by subtracting the cross-sectional area Ca of the core 2 from the cross-sectional area Ba of the ion exchange membrane roll 10. The obtained cross-sectional area Ba - Ca is defined as the cross-sectional area Aa of the ion exchange membrane part 3, that is, the mean area of the cross section of the ion exchange membrane that are orthogonal to the winding shaft direction in the ion exchange membrane roll.

Next, the ion exchange membrane roll 10 is unwound to drawn out the ion exchange membrane 1, and the length L of the first side of the ion exchange membrane 1 is measured. As the length L, the numerical value calculated from the ion exchange membrane conveyance speed and the winding time when the ion exchange membrane roll is made, or the numerical value obtained by a measuring instrument such as a rolled length counter provided on an ion exchange membrane roll producing apparatus or a slitter may be used. Further, ten membrane thicknesses of the ion exchange membrane 1 at regular intervals in the first side direction are measured. The mean value of the obtained membrane thicknesses is defined as the mean thickness d of the ion exchange membrane 1. The cross-sectional area dL of either side face of the ion exchange membrane 1 is calculated by multiplying the length L of the first side of the ion exchange membrane 1 by the mean thickness d.

The cross-sectional area Aa - dL, which excludes the cross-sectional area of the ion exchange membrane 1, that is, which is the cross-sectional area of the air present between the layers of the ion exchange membrane 1, in the ion exchange membrane part 3 is calculated by subtracting the cross-sectional area dL of the ion exchange membrane 1 from the cross-sectional area Aa of the ion exchange membrane part 3. The proportion of the air on the cross section, that is, the air layer proportion can be calculated by dividing this cross-sectional area Aa - dL of the air by the cross-sectional area Aa of the ion exchange membrane part.

The air layer proportion is preferably at least 7%. A high air layer proportion leads to a tendency to much less occurrence of blocking because the air interposes between the layers of the ion exchange membrane. In general, films having no hygroscopicity and a lower air layer proportion are harder to weave during storage or transportation. However, ion exchange membranes in dry conditions can absorb the moisture in the atmosphere to increase the volumes thereof. When the air layer proportion is at least 7%, the air layers can absorb the volume change in ion exchange membrane due to changes in temperature and humidity during storage or transportation. Therefore, for example, it can be suppressed to dislocate part of the ion exchange membrane out of side face portions in the ion exchange membrane roll due to the volume increase in ion exchange membrane in a dry condition. The air layer proportion is more preferably at least 10%, and further preferably at least 15%. In contrast, it is feared that too high an air layer proportion causes the layers of the ion exchange membrane to dislocate out of each other in the step of preparing the ion exchange membrane roll. Further, the ion exchange membrane roll tends to weave when one side face thereof that is orthogonal to the winding shaft direction takes an impact during storage or transportation thereof. In view of less occurrence of such weaving, the air layer proportion is preferably at most 38%, more preferably at most 35%, and further preferably at most 30%.

The hardness of the ion exchange membrane roll is, for example, 80 to 95. This hardness can be measured with an Asker durometer type C. Specifically, an Asker durometer type C measures the value immediately after vertically pressed against and adhered to the top surface of the ion exchange membrane roll. The measurement is performed at ten locations of the ion exchange membrane roll excluding both the end portions of 20 mm each in the winding shaft direction: the ten locations are provided at regular intervals along the length of the ion exchange membrane roll in the winding shaft direction. The mean value of the measurement results is defined as the hardness of the ion exchange membrane roll. That is, this hardness represents the hardness of the ion exchange membrane roll in the direction orthogonal to the winding shaft direction. When this hardness is 100, it means that the hardness of the ion exchange membrane roll is substantially equal to the hardness of the core, and means that almost no air layer is formed between the layers of the ion exchange membrane in the ion exchange membrane roll. This hardness is more preferably 82 to 94, and further preferably 87 to 92. The ion exchange membrane roll having a hardness within this range tends for blocking to less occur, and tends to less weave.

The ion exchange membrane in a dry condition may absorb water in the atmosphere, thereby swelling. Therefore, the aforementioned air layer proportion and hardness are measured under an environment of 20°C to 30°C in temperature, and 30% to 50% in relative humidity. Further, the ion exchange membrane roll allowed to stand under the above environment for at least 24 hours is used as a sample.

(Ion Exchange Membrane)

The ion exchange membrane may be formed of an ion exchange resin alone, and may be obtained by supporting an ion exchange resin on a porous matrix. The ion exchange membrane may be either a cation exchange membrane or an anion exchange membrane. The ion exchange membrane may be a bipolar membrane including both a cation exchange membrane and an anion exchange membrane.

Ion exchange resins are resins having ion exchange groups. An ion exchange group as used herein may be either a cation exchange group or an anion exchange group, and may include both thereof. A cation exchange group as used herein includes, for example, at least one functional group selected from the group consisting of sulfonic acid, carboxylic acid, and phosphonic acid. An anion exchange group as used herein includes, for example, at least one functional group selected from the group consisting of quaternary ammonium, pyridinium, triazolium, imidazolium, primary amino, secondary amino, and tertiary amino. For example, an ion exchange group as used herein preferably includes at least one functional group selected from the group consisting of quaternary ammonium, pyridinium, triazolium, and imidazolium; and more preferably include at least one selected from the group consisting of quaternary ammonium, and pyridinium.

As an ion exchange resin, at least one of a hydrocarbon-based resin and a fluorinated resin may be used. A styrenic resin, an acrylic resin, or the like may be used as a hydrocarbon-based resin. A resin having a perfluorocarbon backbone may be used as a fluorinated resin. As an ion exchange resin, a hydrocarbon-based resin is preferably used, and a copolymer of a styrene derivative and a divinylbenzene derivative is more preferably used.

The matrix functions as a support for ion exchange resins. As the matrix, for example, a porous film, a woven fabric, a nonwoven fabric, a sponge, a film, or the like may be used. The matrix is preferably a porous membrane. When a porous membrane is used as the matrix, the pores of the matrix are preferably filled with the ion exchange resin.

Examples of the matrix include polyolefin resins, fluorinated resins, polyacrylonitrile, polyvinyl chloride, polyester, polyamide, polysulfone, polyethersulfone, polyphenylene sulfone, polyphenylene sulfide, polyimide, polyetherimide, polyamide-imide, polycarbonate, polyacrylate, cellulose acetate, and polyether ether ketone, and copolymers thereof. Polyolefin resins here encompass polyethylene, polypropylene, polybutadiene, polymethylpentene, polybutene, polypentene, polyhexene, and polymethylheptene, and copolymers thereof. Fluorinated resin here encompass polytetrafluoroethylene, poly(tetrafluoroethylene-hexafluoropropylene), polyvinylidene fluoride, polyvinylidene fluoride, polyhexafluoropropylene, and polychlorotrifluoroethylene, and copolymers thereof. The matrix preferably contains a polyolefin resin, and more preferably contains polyethylene or polypropylene.

The membrane thickness of the matrix is, for example, 5 $\mu$m to 200 $\mu$m, preferably 5 $\mu$m to 170 $\mu$m, more preferably 10 $\mu$m to 120 $\mu$m, and further preferably 15 $\mu$m to 100 $\mu$m.

The porosity of the matrix is, for example, 10% to 55%, preferably 20% to 50%, and more preferably 30% to 45%.

(Method of Producing Ion Exchange Membrane in Wet Condition)

The ion exchange membrane in a wet condition is produced by, for example, the following method.

First, a first structure is obtained by bringing a polymerizable composition into contact with the matrix. Thereafter a second structure is obtained by curing the polymerizable composition. The ion exchange membrane in a wet condition is obtained by introducing the ion exchange group into this second structure.

This polymerizable composition contains, for example, a monomer of an ion exchange resin precursor or a monomer of an ion exchange resin, and a radical polymerizable monomer polymerizable with this monomer.

The polymerizable composition is typically liquid under room temperature and standard pressure. Here, room temperature means a temperature of 20°C to 40°C, and standard pressure means 1 atm.

Examples of the monomer of an ion exchange resin precursor include styrene derivatives such as chloromethylstyrene, bromomethylstyrene, and iodomethylstyrene. Examples of a monomer of an ion exchange resin as used herein include styrene derivatives having ion exchange groups such as quaternary ammonium groups. As the monomer of an ion exchange resin, vinylbenzyltrimethylammonium and a salt thereof is preferably used, and vinylbenzyltrimethylammonium chloride is more preferably used.

The proportion of the monomer of an ion exchange resin precursor, or the monomer of an ion exchange resin in the polymerizable composition is, for example, 5 mass% to 95 mass%. This proportion is preferably at least 50 mass%, preferably at least 60 mass%, more preferably at least 65 mass%, and further preferably at least 68 mass%. When this proportion is high, an ion exchange resin having a large amount of ion exchange groups per unit mass tends to be obtained.

The radical polymerizable monomer includes a crosslinking radical polymerizable monomer that functions as a crosslinking agent. Crosslinking radical polymerizable monomers have at least two radical polymerizable groups in one molecule thereof. Examples of such a radical polymerizable group include vinyl, allyl, acryloyl, and methacryloyl; and a crosslinking radical polymerizable monomer having vinyl groups is preferably used. The radical polymerizable monomer may include a radical polymerizable monomer having one radical polymerizable group in one molecule thereof and not functioning as a crosslinking agent.

As a crosslinking radical polymerizable monomer, for example, at least one selected from the group consisting of a divinyl compound having two vinyls, a diallyl compound having two allyls, and a diene is used.

Specific examples of the crosslinking radical polymerizable monomer include divinylbenzene, divinylbenzene derivatives, divinyl sulfone, butadiene, chloroprene, divinylphenyl, trivinylbenzenes, divinylnaphthalene, diallylamine, divinylpyridine, and diallyl isocyanurate. As a radical polymerizable monomer, at least one selected from the group consisting of divinylbenzene and a divinylbenzene derivative are preferably used.

The proportion of the crosslinking radical polymerizable monomer in the polymerizable composition is, for example, 0.1 mass% to 20 mass%, preferably 1 mass% to 18 mass%, and more preferably 3 mass% to 15 mass%. When this proportion is high, mechanical strength tends to increase. When this proportion is excessively high, the performance of the ion exchange resin may deteriorate.

The polymerizable composition may further contain known additives such as a polymerization initiator, an organic solvent, a polymerization inhibitor, an antioxidant, a polymerization inhibitor, a plasticizer, and a surfactant.

As a polymerization initiator, at least one of a thermal polymerization initiator and a photopolymerization initiator is used. Examples of a thermal polymerization initiator as used herein include benzoyl peroxide, p-chlorobenzoyl peroxide, decanoyl peroxide, lauroyl peroxide, acetyl peroxide, tert-butyl(2-ethylhexanoyl)peroxide hexanoate, and tert-butyl peroxy octoate. Examples of a photopolymerization initiator as used herein include 1-phenyl-2-hydroxy-2-methylpropane-1-one, 1-hydroxycyclohexylphenyl ketone, 1-(4-isopropylphenyl)-2-hydroxy-2-methylpropane-1-one, and 2-hydroxy-4'-(2'-hydroxyethoxy)-2-methylpropiophenone.

The proportion of the polymerization initiator in the polymerizable composition is, for example, 0.1 mass% to 10 mass%.

An organic solvent is used for adjusting the viscosity of the polymerizable composition, and for enhancing the solubility of the monomer. As an organic solvent, for example, at least one selected from the group consisting of methanol, dimethyl sulfoxide (DMSO), ethylene glycol (EG), and propylene glycol is used.

The proportion of the organic solvent in the polymerizable composition is, for example, 1 mass% to 40 mass%. A high proportion of the organic solvent decreases the viscosity of the polymerizable composition, which may lead to enhanced production efficiency. In contrast, a high proportion of the organic solvent may lead to generation of voids in the ion exchange resin of the ion exchange membrane, which may deteriorate the performance of the ion exchange membrane. The proportion of the organic solvent in the polymerizable composition is preferably at most 30 mass%, and more preferably at most 25 mass%. For example, this proportion can be measured by NMR or liquid-chromatography.

As a polymerization inhibitor, for example, at least one selected from the group consisting of 4-hydroxy-2,2,6,6-tetramethylpiperidine-1-oxyl (4-OH-TEMPO), 4-tert-butylcatechol (TBC), cupferron, and benzoquinone is used.

The proportion of the polymerization inhibitor in the polymerizable composition is, for example, 0.0001 mass% to 2 mass%, and preferably 0.001 mass% to 1.0 mass%. For example, this proportion can be measured by gas chromatography.

Preferably, the polymerizable composition contains no water. The polymerizable composition containing water may lead to precipitate of components such as the polymerizable monomers and the polymerization initiator. The concentration of water in the polymerizable composition is preferably at most 10 mass%. The lower limit of the concentration of water is 0 mass% according to one example, and 100 ppm according to another example. For example, this concentration can be measured by Karl Fischer titration or gas chromatography.

Hereinafter, as an example, an ion exchange membrane producing method when a porous matrix is used as a support will be described in detail.

The method of binging the polymerizable composition into contact with the matrix is not particularly limited. The polymerizable composition may be applied to, sprayed over, or dropped on the matrix. Or, the matrix may be immersed in the polymerizable composition. The amount of the polymerizable composition for the matrix is not particularly limited as long as the pores in the matrix are filled with the polymerizable composition. This amount can be calculated from the densities of the matrix and the polymerizable composition in use. For filling the inside of the matrix with the polymerizable composition, the method of immersing the matrix in the polymerizable composition is preferrable. For enhancing the adhesiveness of the matrix to the polymerizable composition, the matrix may be surface-treated; for example, may be subjected to corona treatment, glow discharging, or alkali treatment.

In the first structure, the polymerizable composition is supported in the matrix. When the polymerizable composition is cured, preferably, at least one principal surface of the first structure is coated with a resin film. Coating with a resin film can lead to enhanced smoothness of the surface of the ion exchange membrane. Further, integration of the upper and lower layers due to polymerization of the polymerizable composition can be prevented when the first structure is in the form of stack or roll. As a resin of a resin film as used herein, for example, in view of thermostability and releasability, a polyester resin such as polyethylene terephthalate, a fluororesin such as a perfluoroethylene propene copolymer and a tetrafluoroethylene-hexaethylene propylene copolymer, or a polyolefin resin such as polyethylene and polypropylene is used. The resin film may be a release film having a coated surface. An appropriate resin film may be selected depending on the components of the polymerizable composition. In view of thermostability and releasability, a polyester film of polyethylene terephthalate or the like is preferrable.

Examples of the method of curing the polymerizable composition include thermal polymerization and photopolymerization. The heating temperature when thermal polymerization is performed may be a temperature lower than the melting point of the matrix, which is a support, and for example, when a polyethylene matrix is used as a support, is 40°C to 130°C. Photopolymerization is performed, for example, by ultraviolet ray irradiation. As an irradiation source, for example, a UV light-emitting diode (LED), a halogen lamp, a xenon lamp, a tungsten lamp, a mercury lamp, or the like is used. In view of easy control of the irradiation wavelength, and hard heat generation, an LED is preferably used. As the method of curing the polymerizable composition, for example, thermal polymerization and photopolymerization may be combined. In this case, preferably, the first structure is subjected to photopolymerization, and thereafter, subjected to thermal polymerization.

The ion exchange group is introduced into an ion exchange resin precursor of the second structure by, for example, immersing the second structure in a processing liquid containing an ion exchange group for the introduction. When the polymerizable composition in use contains a monomer of an ion exchange resin, the introduction of an ion exchange group can be omitted because the second structure contains the ion exchange resin. The ion exchange membrane obtained by the above method may be further subjected to counter ion substitution.

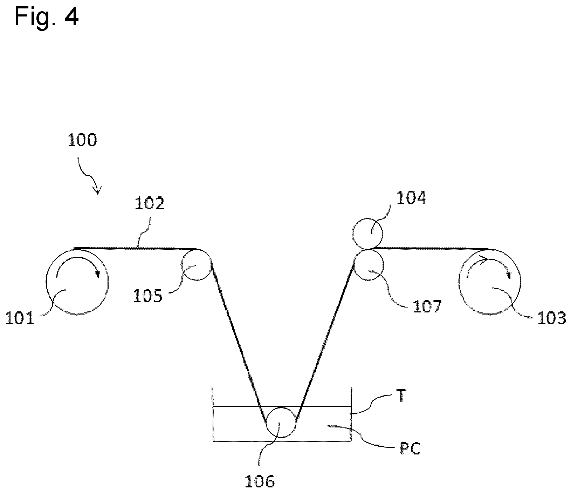

The ion exchange membrane may be produced by roll-to-roll processing. A production example by roll-to-roll processing will be described in more detail with reference to Fig. 4. Fig. 4 is a schematic view schematically showing one example of a polymerizable composition impregnation apparatus. A polymerizable composition impregnation apparatus 100 shown in Fig. 4 includes an unwinder part 101, a conveying part 102, and a winder part 103. Motors (not shown) are attached to the unwinder part 101, the conveying part 102, and the winder part 103. Controllers are connected to these motors. Brakes may be attached to the unwinder part 101, the conveying part 102, and the winder part 103, respectively. A roll of the matrix is disposed at the unwinder part 101. The conveying part 102 has a nip roller 104, a first feed roller 105, a second feed roller 106, a third feed roller 107, and a tank T positioned between the first feed roller 105 and the third feed roller 107. A polymerizable composition PC is housed in the tank T. The second feed roller 106 is positioned in the tank T. A core is placed at the winder part 103. A tension releasing mechanism such as a nip roller, a suction roller, and an S-wrap mechanism with a plurality of rollers having larger wrap angles; feed rollers; etc. (not shown) may be provided between the unwinder part and the winder part. A tension controlling mechanism such as a dancer roller may be also provided for absorbing tension fluctuations. The winder part 103 may be provided with a near-roller, a touch roller, etc.

First, the roll of the matrix is disposed at the unwinder part 101, and the core is placed at the winder part 103. The motors of the unwinder part 101 and the winder part 103 are operated, the end of the one short side of the matrix is drawn out to unwind the roll of the matrix, and the matrix is conveyed into the polymerizable composition in the tank T. In the tank T, the polymerizable composition is supported in the conveyed matrix. The matrix where the polymerizable composition is supported is nipped by the nip roller 104 provided on the feed roller 107 whereby an excessive polymerizable composition can be removed. In addition, at this time, the resin film from a feeding mechanism (not shown) is layered on at least one principal surface to be nipped whereby the resin film can be laminated on the surface of the matrix where the polymerizable composition is supported. The resin film may be laminated on one surface alone, and may be laminated on both the surfaces. When the first structure roll is made and thereafter polymerized, lamination on one surface alone can lead to reduced costs. Further, in this case, the nip roller 104 may be attached above the winder part 103. The obtained laminated film is further conveyed and wound around the core of the winder part 103 to obtain a roll of the laminated film. This roll of the laminated film is taken out of the winder part 103 and disposed in an oven, so that the polymerizable composition is subjected to thermal polymerization. According to this, the roll of the laminated film that contains the second structure is obtained.

The polymerizable composition impregnation apparatus 100 shown in Fig. 4 may be provided with a polymerization mechanism between the nip roller 104 and the winder part 103. **In** this case, the resin film is preferably lamented on both the surfaces of the matrix because laminating the resin film on both the surfaces of the matrix where the polymerizable composition is supported easily leads to uniform smoothness of both the faces of the ion exchange membrane. A polymerization mechanism as used herein includes at least one of ultraviolet irradiation equipment, and a heating device. For example, the laminated film being conveyed from the nip roller 104 to the winder part 103 is irradiated with ultraviolet rays or heated whereby the polymerizable composition is cured. The obtained laminated film containing the second structure is wound around the core of the winder part 103, whereby a roll of the laminated film containing the second structure is obtained.

Next, the roll of the laminated film containing the second structure is immersed in a processing liquid containing an ion exchange group, so that the ion exchange group is introduced into the roll. Thereafter, the resultant is immersed in water to be washed. According to this, a roll of the ion exchange membrane in a wet condition is obtained. When the polymerizable composition in use contains a monomer of an ion exchange resin, the introduction of an ion exchange group can be omitted. At this time, the resin film may be peeled, and may be not peeled. Preferably, the resin film may be peeled because an ion exchange group is more easily introduced when the resin film is peeled.

The ion exchange membrane obtained by the above method may be further subjected to counter ion substitution. Counter ion substitution is performed by, for example, immersing the roll of the ion exchange membrane in a processing liquid containing desired counter ions, and thereafter immersing, in water, and washing the resultant. When the polymerizable composition in use contains a monomer of an ion exchange resin, the roll of the ion exchange membrane in a wet condition is obtained according to this counter ion substitution.

When, for example, it does not take so much time to introduce an ion exchange group, introduction of an ion exchange group, and counter ion substitution may be performed by, for example, roll-to-roll processing continuously. That is, one may convey the second structure into a tank that is before the winder part 103, and that contains a processing liquid containing an ion exchange group, or a processing liquid containing desired counter ions, and further convey and wind the second structure having immersed in this processing liquid.

When the ion exchange membrane is in the form of laminated film, the ion exchange membrane roll in a wet condition may be obtained by, for example, peeling a film laminated on the ion exchange membrane from the laminated film, and winding the ion exchange membrane alone by roll-to-roll processing.

(Method of Producing Ion Exchange Membrane Roll)

The ion exchange membrane roll producing method according to the embodiment includes: conveying the ion exchange membrane in a dry condition to the core at a conveyance speed of 0.75 m/min to 30 m/min, and winding the ion exchange membrane in a dry condition around the core at a winding tension of 3 N/m to 100 N/m. **In** this winding, the ion exchange membrane in a dry condition is wound around the core in such a manner that no pressure is applied to the core or the surface of the ion exchange membrane in a dry condition, which is part of the ion exchange membrane that has been wound around the core.

This producing method will be described in the following in detail.

First, the roll of the ion exchange membrane in a wet condition is prepared by, for example, the aforementioned method. Next, the end of the one short side of the ion exchange membrane is drawn out to unwind the roll of the ion exchange membrane in a wet condition, and this ion exchange membrane is conveyed. The ion exchange membrane being conveyed in a wet condition is dried, and the ion exchange membrane in a dry condition is further conveyed toward the core. The conveyed ion exchange membrane in a dry condition is wound around the core to obtain the ion exchange membrane roll in a dry condition. At this time, the air layer proportion and the hardness of the ion exchange membrane roll can be adjusted by adjusting the conveyance speed of the ion exchange membrane in a dry condition, the winding tension when the ion exchange membrane is wound, and the pressing force when the ion exchange membrane is wound. The ion exchange membrane roll in a dry condition may be used instead of the ion exchange membrane roll in a wet condition. In this case, drying can be omitted.

That is, the higher the conveyance speed of the ion exchange membrane is, the easier it is for the atmosphere to be taken into the spaces between the layers of the ion exchange membrane in the ion exchange membrane roll because the atmosphere follows to be conveyed with the ion exchange membrane, which leads to a tendency to raise the air layer proportion. The conveyance speed is preferably 0.75 m/min to 30 m/min. When the conveyance speed is within this range, an ion exchange membrane roll having an appropriate amount of the air layers tends to be obtained. In view of improving production efficiency, the conveyance speed is preferably at least 3 m/min, more preferably at least 5 m/min, and further preferably at least 10 m/min. This conveyance speed can be calculated from, for example, the rotation number and the outer diameter of the conveying roller provided immediately before the winder part. The rotation number of the roller can be measured by an encoder of the motor attached to the roller.

A higher winding tension when the ion exchange membrane is wound around the core makes it more difficult for the atmosphere to be taken into the spaces between the layers of the ion exchange membrane in the ion exchange membrane roll, and thus, leads to a tendency to lower the air layer proportion. The winding tension is preferably 3 N/m to 100 N/m. When the winding tension is in this range, an ion exchange membrane roll having an appropriate amount of the air layers tends to be obtained. The winding tension is preferably 5 N/m to 50 N/m, and may be 10 N/m to 40 N/m. This winding tension can be measured using, for example, a load cell disposed at the conveying roller. The measured tension is fed back to the unwinder part and/or the winder part to adjust the torque(s) of the motor(s), and the rotation numbers of the rollers whereby the tension can be controlled so as to take the setting value.

Preferably, no pressure is applied to the core or the surface of the ion exchange membrane, which is part of the ion exchange membrane that has been wound around the core. That is, for example, when the ion exchange membrane is wound using touch rollers or the like while the surface of the wound ion exchange membrane is pressed, the atmosphere taken in between the layers of the ion exchange membrane is pushed out, and therefore, it is feared that the air layer proportion of the ion exchange membrane roll is at most 5%. Thus, when the ion exchange membrane roll is produced, preferably, the ion exchange membrane is wound without using touch rollers or the like, so that no pressure is applied to the core, or the surface of the ion exchange membrane, which is part of the ion exchange membrane that has been wound around the core.

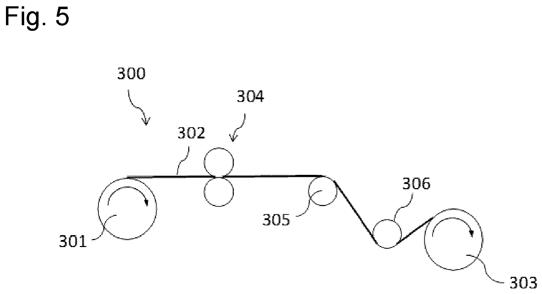

The ion exchange membrane roll in a dry condition may be produced by roll-to-roll processing. Production by roll-to-roll processing will be described in more detail with reference to Fig. 5. Fig. 5 is a schematic view schematically showing one example of an ion exchange membrane roll producing apparatus. An ion exchange membrane roll producing apparatus 300 shown in Fig. 5 includes an unwinder part 301, a conveying part 302, and a winder part 303. Motors (not shown) are attached to the unwinder part 301, the conveying part 302, and the winder part 303. Controllers are connected to these motors. Brakes may be attached to the unwinder part 301, the conveying part 302, and the winder part 303, respectively. The ion exchange membrane roll in a wet condition is disposed at the unwinder part 301. The conveying part 302 has a tension releasing mechanism 304, a feed roller 305, a near-roller 306, and a washing mechanism and a drying mechanism (none of the mechanisms is shown). A core for the ion exchange membrane roll in a dry condition is placed in the winder part 303. The near-roller 306 is placed in the vicinity of the core so as not to be in contact with the core of the winder part 303, or the surface of the wound ion exchange membrane. The ion exchange membrane roll producing apparatus 300 may be provided with feed rollers etc. (not shown). As the tension releasing mechanism 304, any of nip rollers, suction rollers, and S-wrap mechanisms with a plurality of rollers having larger wrap angles, etc. may be used. A tension controlling mechanism such as a dancer roller is preferably provided for absorbing tension fluctuations. A smoothing mechanism such as an expander roller and a pinch roller may be provided before the winder part 303. The washing device and/or the near-roller 306 may be omitted. An inspection mechanism and/or a static eliminating mechanism may be further provided.

First, the ion exchange membrane roll in a wet condition is disposed at the unwinder part 301, and the core is placed at the winder part 303. The motors of the unwinder part 301 and the winder part 303 are operated, the end of the one short side of the ion exchange membrane in a wet condition is drawn out to unwind the ion exchange membrane roll in a wet condition. In the washing mechanism, for example, the ion exchange membrane is washed using a washing fluid such as water. The washed ion exchange membrane is further conveyed to the drying mechanism. In the drying mechanism, the conveyed washed ion exchange membrane is dried by, for example, heating with a heater or warm air. The obtained ion exchange membrane in a dry condition is further conveyed to the winder part 303, and wound around the core. According to this, the roll of the ion exchange membrane in a dry condition is obtained. The core may be removed from the obtained roll.

The obtained ion exchange membrane roll in a dry condition may be further subjected to slitting with a slitter. In slitting, the ion exchange membrane is divided in the direction into a plurality of slits in parallel to the first side. This slitting is performed by roll-to-roll processing. That is, the conveyed ion exchange membrane drawn out of the ion exchange membrane roll and subjected to slitting is wound around the core in the same manner as the ion exchange membrane roll. The slitting may be continuously performed by further providing the ion exchange membrane roll producing apparatus 300 shown in Fig. 5 with a slitting mechanism. The slitting mechanism is provided with, for example, blades capable of cutting the ion exchange membrane. The slitting mechanism may be further provided with a metal roller or a ceramic roller. The ion exchange membrane may be cut by pushing the blades against the ion exchange membrane conveyed onto a hard metal roller or a ceramic roller in the slitting mechanism, or by pushing the blades against the ion exchange membrane being conveyed in the air on a groove or the like provided between conveying rollers or on a metal roller. The slitting mechanism is provided, for example, before the winder part 303. When the slitting mechanism is provided, a plurality of winder parts corresponding to the widths of the slits after the slitting are provided whereby ion exchange membrane rolls formed by cutting the ion exchange membrane into desired widths can be obtained. When the slitting mechanism is provided, one may provide a rolling traverse machine immediately before the slitting mechanism to perform oscillation as oscillating the ion exchange membrane right and left by the use of the machine.

Even when slitting is performed with a slitter after the ion exchange membrane roll in a dry condition is made, the air layer proportion and the hardness of the ion exchange membrane roll can be adjusted by adjusting the conveyance speed of the ion exchange membrane in a dry condition in the slitter, the winding tension when the ion exchange membrane is wound, and the pressing force when the ion exchange membrane is wound. The slitter may be operated with the same mechanism as the aforementioned slitting mechanism.

(Method of Producing Ion Exchange Sheet)

The ion exchange membrane roll according to the embodiment is used, for example, for producing an ion exchange sheet. The ion exchange sheet is an ion exchange membrane in a dry condition not in the form of continuous film. The ion exchange sheet may have any of rectangular, square, polygonal, circular, and elliptical shapes.

The ion exchange sheet is disposed, for example, inside any of a pure water producing system, a sea water desalination system, a demineralizer, a fuel cell, and a water electrolyzer to function as a separating membrane. The ion exchange sheet is preferably used in a membrane electrode assembly for fuel cells or water electrolyzers.

Using the ion exchange membrane roll according to the embodiment allows the ion exchange membrane roll to be continuously unwound to draw out the ion exchange membrane with the speed and the tension kept constant without puckering or slipping, which can lead to continuous production of the ion exchange sheet with a high yield.

The method of producing the ion exchange sheet includes, for example, unwinding the ion exchange membrane roll in a dry condition to draw out the ion exchange membrane; and cutting the ion exchange membrane after the unwinding. The cutting encompasses: cutting the ion exchange membrane in the direction parallel to the second side; and stamping out a predetermined shape from the ion exchange membrane. The method of cutting the ion exchange membrane is not particularly limited. For example, a metal blade is used for cutting the ion exchange membrane.

A membrane electrode assembly is obtained by, for example, stacking electrodes on the ion exchange sheet. One may obtain a membrane electrode assembly of a desired shape by joining the ion exchange membrane and electrodes to prepare a continuous membrane electrode assembly, and thereafter cutting this assembly.

[Examples]

Hereinafter the present invention will be described in detail with reference to examples. These examples do not limit the present invention.

<Example 1>

(Preparation of Polymerizable Composition)

A polymerizable composition was obtained by mixing chloromethyl styrene (95 parts by mass), a styrene solution of 57 mass% divinylbenzene (5 parts by mass), a polymerization initiator (trade name: PERBUTYL O, 5 parts by mass), and an epoxy compound (trade name: Epolite 40E, 5 parts by mass).

(Production of Roll of Ion Exchange Membrane in Wet Condition)

A roll of a polyethylene porous membrane having a porosity of 44%, a thickness of 25 $\mu$m, a width of 1000 mm, and a length of 400 m was used as a matrix for an ion exchange membrane.
The matrix was unwound and immersed in a tank containing the polymerizable composition, so that the polymerizable composition was supported therein, and thereafter, one face of the resultant matrix was overlaid with a polyethylene terephthalate film having a thickness of 50 $\mu$m to be wound around a hard-chromed metal roll. Then, a roll of a laminated film containing a first structure was obtained.
The obtained roll was heated in nitrogen under pressure at 0.3 MPa at 80°C for 5 hours to subject the polymerizable composition in the porous membrane to polymerization. Then, a roll of a laminated film containing a second structure was obtained.
The obtained roll was unwound to draw out the laminated film, the polyethylene terephthalate film was peeled from the laminated film, and thereafter the resultant film was rewound. Then, a roll containing no polyethylene terephthalate film but containing the second structure alone was prepared. This second structure roll was immersed in an aqueous solution containing 6 mass% trimethylamine, and 25 mass% acetone at room temperature for 16 hours to aminate the polymerized portion of chloromethyl styrene. Thereafter, the resultant was immersed in a 0.5 mol/L potassium hydrogen carbonate aqueous solution, so that ion exchange of chloride ions for bicarbonate ions was performed with respect to counter ions to quaternary ammonium bases in the membrane. Thereafter, the resultant was immersed in and washed with pure water to obtain the ion exchange membrane roll in a wet condition.

(Production of First and Second Ion Exchange Membrane Rolls in Dry Condition)

The ion exchange membrane roll in a wet condition was unwound, and exposed to a warm air at 40°C in the conveying section after the unwinding whereby the ion exchange membrane was dried. The dried membrane was conveyed to a winder part, and wound around a glass fiber-reinforced plastic core having an inner diameter of 153 mm, a thickness of 10 mm, and a width of 1200 mm as a core. As a result, an ion exchange membrane roll in a dry condition was produced. The conveyance speed at this time was 3 m/min, and the winding tension was 15 N/m. No touch roller was used, but a near-roller was used for the winding. The obtained first ion exchange membrane roll had a length of 400 m, and a circumference of 688 mm. The obtained ion membrane in a dry condition had a mean thickness of 28 $\mu$m. The air layer proportion calculated from the circumference of the first ion exchange membrane roll, and the diameter of the core was 21%, and the hardness was 92.
This first ion exchange membrane roll was disposed at a slitter, and was cut into slits each having a width of 420 mm while having been fed at the conveyance speed of 3 m/min, and wound whereby a second ion exchange membrane roll including the ion exchange membrane having the length L of 100 m (100,000 mm) was prepared. As a core, an ABS resin core having an inner diameter of 76 mm, a thickness of 8 mm, and a width of 600 mm was used. No touch roller was used but a near-roller was used in the winding. The winding tension was set to 10 N/m. Dancer rollers were used as a tension controller. An expander roller was disposed immediately before a slit position. In slitting, the film did not flap or sag but was stable, and no fluctuations in tension or conveyance speed were observed.

<Examples 2 to 7>

A second ion exchange membrane roll was made in the same manner as in example 1 except that the cut widths, the wound length, the conveyance speed, and the winding tension were each changed in the slitter as in table 1.

<Comparative Example 1>

A second ion exchange membrane roll was made in the same manner as in example 1 except that a touch roller was used at the winder part in the slitter.

<Example 8>

The first ion exchange membrane roll prepared in example 2 was disposed at a small slitter. A second ion exchange membrane roll was obtained by subjecting the first ion exchange membrane roll to slitting to be slits each having a width of 130 mm. For the slitting, a near-roller was used, and the conveyance speed was 3 m/min, and the winding tension was 10 N/m. In slitting, the film did not flap or sag but was stable, and no fluctuations in tension or conveyance speed were observed.

A third ion exchange membrane roll including an ion exchange membrane having the length L of 5 m (5,000 mm) was obtained by rewinding the obtained second ion exchange membrane roll around an ABS core having an inner diameter of 10 mm, a thickness of 2.5 mm, and a width of 200 mm as a core at the conveyance speed of 0.75 m/min and the winding tension of 9 N/m. In the rewinding, no near-roller or touch roller was used, but tension control at the unwinder part and the winder part alone was performed. In the rewinding, the film did not flap or sag but was stable.

<Examples 9 to 11 and Comparative Examples 2 and 3>

A third ion exchange membrane roll was obtained in the same manner as in example 8 except that the winding tension and the conveyance speed were changed as in table 2.

(Example 12)

After an ion exchange membrane roll in a wet condition was obtained as in example 1, the ion exchange membrane roll in a wet condition was unwound, and exposed to a warm air at 30°C in the conveying section after the unwinding whereby the ion exchange membrane was dried. The dried membrane was conveyed to a winder part, and wound around an ABS resin core having an inner diameter of 153 mm, a thickness of 7.5 mm, and a width of 1200 mm as a core. As a result, an ion exchange membrane roll in a dry condition was produced. The conveyance speed at this time was 1 m/min, and the winding tension was 25 N/m. In the winding, central driving-type apparatus offering tension control alone without any touch roller or near-roller was used. The obtained first ion exchange membrane roll had a length of 398 m, and a circumference of 711 mm. The obtained ion membrane in a dry condition had a mean thickness of 28 $\mu$m. The air layer proportion calculated from the circumference of the first ion exchange membrane roll, and the diameter of the core was 38%, and the hardness was 82.

This first ion exchange membrane roll was disposed in a slitter, and was cut into slits each having a width of 414 mm while having been fed at the conveyance speed of 5 m/min, and wound whereby a second ion exchange membrane roll including the ion exchange membrane having the length L of 386 m (386,000 mm) was prepared. As a core, an ABS resin core having an inner diameter of 153 mm, a thickness of 7.5 mm, and a width of 600 mm was used. No touch roller was used but a near-roller was used in the winding. The winding tension was set to 24 N/m. Dancer rollers were used as a tension controller. An expander roller was disposed immediately before a slit position. In slitting, the film did not flap or sag but was stable, and no fluctuations in tension or conveyance speed were observed.

<Evaluation Tests>

(Thickness d of Ion Exchange Membrane)

The ion exchange membrane roll was unwound to draw out the ion exchange membrane therefrom, and ten membrane thicknesses of the ion exchange membrane at regular intervals in the width direction were measured. The mean value of the measured results was defined as the mean thickness d of the ion exchange membrane. For the measurement, a contact thickness gauge (Digimatic Indicator ID-H0530 manufactured by Mitutoyo Corporation) was used. The results of this measurement were shown in tables 1 and 2.

(Measurement of Air Layer Proportion)

The air layer proportions of the second ion exchange membrane rolls obtained in examples 1 to 7 and 12 and comparative example 1, and the third ion exchange membrane rolls obtained in examples 8 to 11 and comparative examples 2 and 3 were each measured by the following method. The results of this measurement were shown in tables 3 and 4.

Ten circumferences of the ion exchange membrane roll at regular intervals in the winding shaft direction of the ion exchange membrane roll were measured with a tape measure. The mean value of the measured results was defined as the circumference Bc (mm) of the ion exchange membrane roll.

The diameter Bl (mm) was calculated by dividing the obtained Bc (mm) by the ratio of a circle's circumference to its diameter, 3.14, and from the following formula, the cross-sectional area Ba (mm$^2$) of the ion exchange membrane roll was calculated.

$$Ba = (Bl^2 \times 3.14)/4$$

Next, from the diameter Cl (mm) of the core in use and the following formula, the cross-sectional area Ca (mm) of the core part was calculated.

$$Ca = (Cl^2 \times 3.14)/4$$

Here, when the inner diameter and the thickness of the core were known, the diameter of the core could be also obtained by "inner diameter + thickness $\times$2", and when the diameter of the core was measured, one may measure the diameters of the core at both the ends with a tape measure, and use the mean value of the measured results.

The cross-sectional area Aa of the ion exchange membrane part was calculated from Ba - Ca. From the obtained cross-sectional area Aa, the air layer proportion was calculated based on the following formula:

$$\text{the air layer proportion } (\%) = (Aa - dL)/Aa \times 100$$

(Measurement of Hardness)

Using an Asker durometer type C manufactured by Kobunshi Keiki Co., Ltd., the value immediately after the durometer was vertically pressed against and adhered to the top surface of the ion exchange membrane roll was measured. The measurement is performed at ten locations of the ion exchange membrane roll excluding both the end portions of 20 mm each in the winding shaft direction: the ten locations are provided at regular intervals along the length of the ion exchange membrane roll in the winding shaft direction. The results of this measurement were shown in tables 3 and 4.

(Blocking Test)

Whether or not blocking occurred to each of the second ion exchange membrane rolls obtained in examples 1 to 7 and 12 and comparative example 1, and the third ion exchange membrane rolls obtained in examples 8 to 11 and comparative examples 2 and 3 was evaluated by the following method. The results of this evaluation were shown in tables 3 and 4.

First, the ion exchange membrane roll was allowed to stand in a high temperature high humidity tank at a temperature of 50°C and a relative humidity of 80% for 20 hours in such a manner that the core was held at both the ends thereof, so that the roll floated in the air. As pretreatment for the test, the outermost layer of the ion exchange membrane was peeled off and removed by one round from the end of the short side of the ion exchange membrane that was positioned on the outermost periphery of the ion exchange membrane roll after standing. Ten circumferences of the ion exchange membrane roll after the outermost layer was peeled off by one round that were at regular intervals in the winding shaft direction of the ion exchange membrane were measured using a tape measure, and the mean value of the measured results was defined as Q (mm). Next, the ion exchange membrane roll was disposed at a simplified unwinder in such a manner that the core was held at both the ends thereof, so that the end of the short side came at the top of the roll. Thereafter, the roll was rotated once using the ends as starting points. After the rotation once, the contact point of the outermost layer of the ion exchange membrane and the ion exchange membrane roll was defined as a separation point. Ten lengths of the circular arc from the top of the roll to the separation point, where the outermost layer of the ion exchange membrane and the ion exchange membrane roll were in contact with each other, at regular intervals in the winding shaft direction of the ion exchange membrane were measured with a tape measure, and the mean value of the measured results was defined as q (mm).

Using the obtained values Q and q, the angle θ (°) corresponding to the section where the outermost layer of the ion exchange membrane was in contact with the ion exchange membrane roll was calculated by the following formula:

$$\theta = 360 \times (q/Q)$$

From the obtained θ, the state of blocking was determined by the following criteria. The results of this determination were shown in tables 5 and 6.

> good: θ was at least 90° and less than 135°
> bad: could not be peeled off due to adhesion in the pretreatment of peeling-off and removing the outermost layer; or θ was at least 135°

When no blocking occurred at all, the angle was 90° because the outermost layer of the ion exchange membrane hung downward due to self-weight when the ion exchange membrane roll was rotated.

(Weaving Test)

The distance from the core end to the end of the ion exchange membrane was measured on one end face of the ion exchange membrane roll with a ruler. The ion exchange membrane roll was hung down in a high temperature high humidity tank and allowed to stand in the atmosphere of 50°C and 80% in relative humidity for 20 hours in such a manner that the core was held at both the ends thereof, so that the measured end face was on the bottom side, and the roll inclined at 4° with respect to the horizontal plane. After the standing, the distance from the core end to the end of the ion exchange membrane was measured on the end face of the ion exchange membrane roll on the bottom side by the use of a ruler to determine the weaving test result from the difference from the initial distance based on the following criteria. The results of this determination were shown in tables 5 and 6.

> good: the difference between the initial distance and the distance after the standing was at least 0 mm and less than 2 mm
> average: the difference between the initial distance and the distance after the standing was at least 2 mm and less than 4 mm
> bad: the difference between the initial distance and the distance after the standing was at least 4 mm

<Evaluation of External Appearance of Ion Exchange Membrane Roll>

The external appearances of the second ion exchange membrane rolls obtained in examples 1 to 7 and 12 and comparative example 1, and the third ion exchange membrane rolls obtained in examples 8 to 11 and comparative examples 2 and 3 immediately after the preparation thereof were determined as follows. The results of this measurement were shown in tables 5 and 6.

1. Puckers

The presence or not of puckers on the surface of the ion exchange membrane roll was visually evaluated.

> good: no pucker generated on the surface of the roll
> bad: puckers generated on the surface of the roll

2. Dislocation

The end faces of the ion exchange membrane roll were observed, and dislocation was determined by the following criteria.

> good: any of the projecting amounts of the ion exchange membrane from the end faces of the roll was at least 0 mm and less than 2 mm
> average: any of the projecting amounts of the ion exchange membrane from the end faces of the roll was at least 2 mm and less than 4 mm
> bad: any of the projecting amounts of the ion exchange membrane from the end faces of the roll was at least 4 mm

Table 1

Table 1)

|  | ion exchange membrane | | | core | conditions for producing roll | | |
|---|---|---|---|---|---|---|---|
|  | mean thickness d mm | long side L mm | short side W mm | diameter Cl mm | winding method | winding tension N/m | conveyance speed m/min |
| Example 1 | 0.028 | 100000 | 420 | 92 | winding with near-roller | 10 | 3 |
| Example 2 | 0.028 | 100000 | 420 | 92 | winding with near-roller | 30 | 3 |
| Example 3 | 0.028 | 100000 | 420 | 92 | winding with near-roller | 40 | 3 |
| Example 4 | 0.028 | 100000 | 420 | 92 | winding with near-roller | 40 | 5 |
| Example 5 | 0.028 | 100000 | 420 | 92 | winding with near-roller | 40 | 10 |
| Example 6 | 0.028 | 150000 | 420 | 92 | winding with near-roller | 10 | 3 |
| Example 7 | 0.028 | 150000 | 420 | 92 | winding with near-roller | 24 | 20 |
| Example 12 | 0.028 | 386000 | 414 | 168 | winding with near-roller | 24 | 5 |
| Comparative example 1 | 0.028 | 100000 | 420 | 92 | winding with touch roller | 10 | 3 |

Table 2

(Table 2)

|  | ion exchange membrane | | | core | conditions for producing roll | | |
|---|---|---|---|---|---|---|---|
|  | mean thickness d mm | long side L mm | short side W mm | diameter Cl mm | winding method | winding tension N/m | conveyance speed m/min |
| Example 8 | 0.028 | 5000 | 130 | 15 | tension control alone | 9 | 0.75 |
| Example 9 | 0.028 | 5000 | 130 | 15 | tension control alone | 7 | 0.75 |
| Example 10 | 0.028 | 5000 | 130 | 15 | tension control alone | 6 | 0.75 |

(continued)

|  | ion exchange membrane | | | core | conditions for producing roll | | |
|---|---|---|---|---|---|---|---|
|  | mean thickness d mm | long side L mm | short side W mm | diameter Cl mm | winding method | winding tension N/m | conveyance speed m/min |
| Example 11 | 0.028 | 5000 | 130 | 15 | tension control alone | 3 | 0.75 |
| Comparative example 2 | 0.028 | 5000 | 130 | 15 | tension control alone | 115 | 0.75 |
| Comparative example 3 | 0.028 | 5000 | 130 | 15 | tension control alone | 2 | 0.75 |

Table 3

(Table 3)

|  | roll | | | core | ion exchange membrane part | ion exchange membrane | roll | |
|---|---|---|---|---|---|---|---|---|
|  | circumference Bc mm | diameter Bl mm | cross-sectional area Ba $mm^2$ | cross-sectional area Ca $mm^2$ | cross-sectional area Aa (Ba-Ca) $mm^2$ | lateral area dL $mm^2$ | air layer proportion (%) (Aa-dL)/Aa*100 | hardness |
| Example 1 | 360.5 | 115 | 10347 | 6644 | 3703 | 2800 | 24 | 92 |
| Example 2 | 353.0 | 112 | 9921 | 6644 | 3277 | 2800 | 15 | 92 |
| Example 3 | 348.5 | 111 | 9670 | 6644 | 3026 | 2800 | 7 | 94 |
| Example 4 | 353.5 | 113 | 9949 | 6644 | 3305 | 2800 | 15 | 91 |
| Example 5 | 355.0 | 113 | 10034 | 6644 | 3390 | 2800 | 17 | 92 |
| Example 6 | 395.0 | 126 | 12422 | 6644 | 5778 | 4200 | 27 | 90 |
| Example 7 | 398.0 | 127 | 12612 | 6644 | 5968 | 4200 | 30 | 91 |
| Example 12 | 653.2 | 208 | 33971 | 22156 | 11815 | 10808 | 9 | 93 |
| Comparative example 1 | 347.0 | 111 | 9585 | 6644 | 2941 | 2800 | 5 | 96 |

Table 4

(Table 4)

| | roll | | | core | ion exchange membrane part | ion exchange membrane | roll | |
|---|---|---|---|---|---|---|---|---|
| | circumference Bc mm | diameter Bl mm | cross-sectional area Ba mm$^2$ | cross-sectional area Ca mm$^2$ | cross-sectional area Aa (Ba-Ca) 2 mm | lateral area dL 2 mm | air layer proportion (%) (Aa-dL)/Aa*100 | hardness |
| Example 8 | 70.0 | 22 | 390 | 177 | 214 | 140 | 34 | 90 |
| Example 9 | 71.0 | 23 | 401 | 177 | 225 | 140 | 38 | 87 |
| Example 10 | 71.5 | 23 | 407 | 177 | 230 | 140 | 39 | 82 |
| Example 11 | 73.5 | 23 | 430 | 177 | 253 | 140 | 45 | 87 |
| Comparative example 2 | 63.5 | 20 | 321 | 177 | 144 | 140 | 3 | 98 |
| Comparative example 3 | 78.0 | 25 | 484 | 177 | 308 | 140 | 55 | 80 |

Table 5

(Table 5)

| | roll evaluation | | external appearance of roll | |
|---|---|---|---|---|
| | blocking | weaving | puckers | dislocation |
| Example 1 | good | good | good | good |
| Example 2 | good | good | good | good |
| Example 3 | good | good | good | good |
| Example 4 | good | good | good | good |
| Example 5 | good | good | good | good |
| Example 6 | good | good | good | good |
| Example 7 | good | good | good | good |
| Example 12 | good | good | good | good |
| Comparative example 1 | bad | bad | good | good |

Table 6

(Table 6)

| | roll evaluation | | external appearance of roll | |
|---|---|---|---|---|
| | blocking | weaving | puckers | dislocation |
| Example 8 | good | good | good | good |
| Example 9 | good | good | good | good |
| Example 10 | good | average | good | average |

(continued)

|  | roll evaluation | | external appearance of roll | |
| --- | --- | --- | --- | --- |
|  | blocking | weaving | puckers | dislocation |
| Example 11 | good | average | good | average |
| Comparative example 2 | bad | bad | good | good |
| Comparative example 3 | good | bad | bad | average |

[Reference Signs List]

1      Ion exchange membrane
2      Core
3      Ion exchange membrane part
10    Ion exchange membrane roll
100   Polymerizable composition impregnation apparatus
101   Unwinder part
102   Conveying part
103   Winder part
104   Nip roller
105   Feed roller
106   Feed roller
107   Feed roller
300   Ion exchange membrane roll producing apparatus
301   Unwinder part
302   Conveying part
303   Winder part
304   Tension releasing mechanism
305   Feed roller
306   Near-roller
Aa    Area of ion exchange membrane part
Bc    Circumference of ion exchange membrane roll
Bl     Diameter of ion exchange membrane roll
Br     Radius of ion exchange membrane roll
Bw    Length of ion exchange membrane roll in winding shaft direction
Ca    Area of core
Cc    Circumference of core
Cl     Diameter of core
Cr     Radius of core
Cw    Length of core in winding shaft direction
d      Thickness
L      Length of first side
PC    Polymerizable composition
T      Tank
W     Length of second side

**Claims**

1. An ion exchange membrane roll formed by winding a planar ion-exchange membrane in a dry condition by use of a winding shaft in a direction parallel to a second side of the ion exchange membrane, the ion exchange membrane having a first side and the second side that is orthogonal to the first side and that has a length equal to or shorter than the first side, wherein

   an air layer proportion represented by the following formula (I) is more than 5% and at most 50%:

$$(I): \text{the air layer proportion (\%)} = (Aa - dL)/Aa \times 100$$

in the formula (I), Aa is a mean area of a cross section of the ion exchange membrane in the roll, the cross section being orthogonal to a direction of the winding shaft,

d is a mean thickness of the ion exchange membrane, and

L is a length of the first side of the ion exchange membrane.

2. The ion exchange membrane roll according to claim 1, wherein
the air layer proportion is 7% to 38%.

3. The ion exchange membrane roll according to claim 1, wherein
a hardness measured by a durometer (Asker durometer type C) is 80 to 95.

4. The ion exchange membrane roll according to claim 1, wherein
the ion exchange membrane has a mean thickness d of 10 $\mu$m to 200 $\mu$m.

5. The ion exchange membrane roll according to claim 1, wherein
a ratio Br/d of a radius Br of the cross section of the ion exchange membrane roll to the mean thickness d of the ion exchange membrane is 450 to 12000.

6. The ion exchange membrane roll according to claim 1, wherein
the ion exchange membrane contains a porous matrix, and an ion exchange resin supported in the porous matrix.

7. The ion exchange membrane roll according to claim 6, wherein
the ion exchange resin contains at least one ion exchange group selected from the group consisting of quaternary ammonium, pyridinium, triazolium, and imidazolium.

8. The ion exchange membrane roll according to claim 6, wherein
the porous matrix contains a polyolefin resin.

9. The ion exchange membrane roll according to claim 1, wherein
the ion exchange membrane roll has a cylindrical shape.

10. The ion exchange membrane roll according to claim 1, further comprising:

a core, wherein
the ion exchange membrane has been wound around the core.

11. The ion exchange membrane roll according to claim 1, wherein
a ratio Br/Cr of the radius Br of the cross section of the ion exchange membrane roll to a radius Cr of the core is 1.1 to 3.3.

12. A method of producing an ion exchange membrane roll, the roll including: a core; and an ion exchange membrane in a dry condition, the ion exchange membrane having been wound around the core, the method comprising:

conveying the ion exchange membrane in the dry condition to the core at a conveyance speed of 0.75 m/min to 30 m/min; and

winding the ion exchange membrane in the dry condition around the core at a winding tension of 3 N/m to 100 N/m, wherein

the ion exchange membrane in the dry condition is wound around the core in such a manner that no pressure is applied to the core or a surface of the ion exchange membrane in the dry condition, the surface being part of the ion exchange membrane, the part having been wound around the core.

13. The method according to claim 12, wherein
the winding tension is 5 N/m to 50 N/m.

14. The method according to claim 12, wherein

the conveyance speed is 3 m/min to 30 m/min.

15. The method according to claim 12, wherein
a ratio Br/Cr of a radius Br of a cross section of the ion exchange membrane roll to a radius Cr of the core is 1.1 to 3.3,
the cross section being orthogonal to a winding shaft direction of the ion exchange membrane roll.

16. The method according to claim 12, wherein
the ion exchange membrane contains a porous matrix, and an ion exchange resin supported in the porous matrix.

17. The method according to claim 16, wherein
the ion exchange resin contains at least one ion exchange group selected from the group consisting of quaternary ammonium, pyridinium, triazolium, and imidazolium.

18. The method according to claim 16, wherein
the porous matrix contains a polyolefin resin.

19. The method according to claim 12, further comprising:
drying the ion exchange membrane in a wet condition to obtain the ion exchange membrane in the dry condition.

20. The method according to claim 19, further comprising:

supporting a curable composition containing an ion exchange resin precursor on a porous matrix to obtain a structure;
curing the curable composition in the structure to obtain an ion exchange membrane precursor; and
introducing an ion exchange group into the ion exchange membrane precursor to obtain the ion exchange membrane in the wet condition.

21. A method of producing an ion exchange sheet, the method comprising:

unwinding the ion exchange membrane roll according to claim 1, or the ion exchange membrane roll obtained by the method according to claim 12 to draw out the ion exchange membrane; and
cutting the ion exchange membrane after the unwinding.

Fig. 1

Fig. 2

Fig. 3

Fig. 4

Fig. 5

## INTERNATIONAL SEARCH REPORT

| International application No. |
| --- |
| **PCT/JP2024/011168** |

| A. | CLASSIFICATION OF SUBJECT MATTER |
| --- | --- |

*B01J 47/12*(2017.01)i; *B01J 39/05*(2017.01)i; *B01J 41/05*(2017.01)i; *B01J 41/14*(2006.01)i; *B01J 43/00*(2006.01)i; *C08J 5/22*(2006.01)i

FI:  B01J47/12; B01J39/05; B01J41/05; B01J41/14; B01J43/00; C08J5/22 CET; C08J5/22 101; C08J5/22 104

According to International Patent Classification (IPC) or to both national classification and IPC

| B. | FIELDS SEARCHED |
| --- | --- |

Minimum documentation searched (classification system followed by classification symbols)

B01J39/00-49/90, C08J5/22, C02F1/42, B65H16/00-43/08, B65H75/00-99/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2005-162784 A (TOYOTA JIDOSHA KABUSHIKI KAISHA) 23 June 2005 (2005-06-23) claim 5, paragraphs [0014]-[0042], fig. 1 | 1-21 |
| Y | JP 2003-238034 A (TORAY INDUSTRIES, INC.) 27 August 2003 (2003-08-27) paragraphs [0011], [0048]-[0067], table 1 | 1-21 |
| Y | JP 2010-99950 A (SEKISUI CHEMICAL CO., LTD.) 06 May 2010 (2010-05-06) paragraphs [0033], [0048]-[0058], table 1 | 1-21 |
| Y | JP 4-286564 A (TORAY INDUSTRIES, INC.) 12 October 1992 (1992-10-12) paragraphs [0002], [0004] | 1-21 |
| A | CN 217669567 U (ANHUI QINGJI FUEL CELL EQUIPMENT CO., LTD.) 28 October 2022 (2022-10-28) | 1-21 |

☐ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **29 May 2024** | **11 June 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/011168**

| Patent document cited in search report | | | Publication date (day/month/year) | Patent family member(s) | Publication date (day/month/year) |
|---|---|---|---|---|---|
| JP | 2005-162784 | A | 23 June 2005 | (Family: none) | |
| JP | 2003-238034 | A | 27 August 2003 | (Family: none) | |
| JP | 2010-99950 | A | 06 May 2010 | (Family: none) | |
| JP | 4-286564 | A | 12 October 1992 | (Family: none) | |
| CN | 217669567 | U | 28 October 2022 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013177505 A

- JP 2023022684 A